# EUROPEAN PATENT APPLICATION

(11) **EP 2 106 050 A2**
(43) Date of publication of application: **30.09.2009**
(21) Application number: 08170283.9
(22) Date of filing: 28.11.2008
(51) Int. Cl.: H04H 60/58, H04H 60/46, H04H 60/37, H04H 60/61

(54) **Audio matching system and method**

(30) Priority: 17.03.2008 GB 0804983
(71) Applicant: TAYLOR NELSON SOFRES PLC, London W5 1UA (GB)
(72) Inventor: Goodhew, Iain, London W5 1UA (GB)
(74) Representative: Ward, James Norman

(57) **Abstract**

An audio matching system for detecting matching of audio signals, the system comprising: a digital signature generation device (1) for generating signatures from an audio signal, the device comprising: a signal energy analyser (12) arranged to determine the energy level at each of one or more particular frequencies in a sampled data segment of the audio signal; an event detector (13) arranged to detect the occurrence of a predetermined event in the energy level of each said particular frequency of the sampled data segment; a signature generator (14) arranged to extract event data identifying a set of predetermined events detected by the event detector, the event data forming a digital signature for the sampled data segment; and a transmitter for transmitting the digital signature; and an audio signal comparing device (2) for comparing whether two audio signals match, the audio signal comparing device (2) comprising: a receiver (21) for receiving a said digital signature of an audio signal generated by the digital signature generation device (1); an event locator (23) arranged to use the event data of the received digital signature to locate corresponding portions of another sampled data segment of another audio signal; and an event analyser (24) arranged to analyse the corresponding portions located by the event locator (23) and to determine whether they match the predetermined events of the event data, to thereby determine whether the audio signals match.

## Description

The present invention relates to an audio matching system and an audio matching method for detecting matching of audio signals. The system and method make use of digital signatures generated from an audio signal. The system and method are suitable for use in audience measurement/analysis.

Audience measurement/analysis systems are in general known, such systems being designed to obtain viewing figure data for broadcast programmes, such as television programmes and radio programmes, including advertisements. Such data is of considerable importance to broadcasters and advertisers who wish to know the number of viewers viewing their programmes and the demographic breakdown of those viewers.

In known audience measurement systems, a sample of households whose members are demographically representative of the population as a whole is selected, and the viewing of television programmes by the household members is monitored. In this regard, it is important to be able to determine both the programmes which have been watched and the identities of the household members that watched each programme.

In order to determine which programmes have been watched, various methods are known. These include detecting ancillary codes in the programme signal which identify the programme and/or channel, and extracting characteristic signatures from the programme signal which can subsequently be used to identify the programme watched. Such monitoring may be performed by a fixed monitoring apparatus associated with the television receiver, or by a portable monitoring apparatus carried by a user. Systems using both apparatuses together are also known. Detected codes or signatures can be transmitted, for example over a telephone line, to a reference monitoring site at which viewing/listening information from households in the panel is collected for analysis.

In the reference monitoring site, all or many channels, stations or programmes available for viewing or listening may be monitored and information (e.g. codes and signatures) concerning those channels, stations or programmes stored as reference information. This reference information can be compared with the information received from each sample household to determine the programmes watched at the sample household.

In order to determine which household members have watched each programme on each receiving apparatus in a sample household, it is usual to require the household members to sign in and out when they are watching a television set. The members can sign in and out by pressing a button on a remote control or on the fixed monitoring apparatus by the television.

In such a method, a problem occurs that household members sometimes forget to sign in and out when watching television. This results in inaccurate data being collected as to which household members have watched each programme received.

In a system involving the use of both portable and fixed monitoring apparatuses, it has also been suggested to provide a transmitting beacon in the sampled household. The transmitting beacon transmits a radio signal which can be detected by the portable monitoring apparatuses. In this way, it can be determined at the portable monitoring device whether or not the respective household member is in the house or not.

A problem with this proposed method, however, is that it cannot determine which room the household member is in and whether or not they are exposed to a programme being received by a receiving apparatus.

According to a first aspect of the invention, there is provided an audio matching system for detecting matching of audio signals, the system comprising: a digital signature generation device for generating signatures from an audio signal, the digital signature generation device comprising: a signal energy analyser arranged to determine the energy level at each of one or more particular frequencies in a sampled data segment of the audio signal; an event detector arranged to detect the occurrence of a predetermined event in the energy level of each said particular frequency of the sampled data segment; and a signature generator arranged to extract event data identifying a set of predetermined events detected by the event detector, the event data forming a digital signature for the sampled data segment; and an audio signal comparing device for comparing whether two audio signals match, the audio signal comparing device comprising: a receiver for receiving a said digital signature of an audio signal generated by the digital signature generation device; an event locator arranged to use the event data of the received digital signature to locate corresponding portions of another sampled data segment of another audio signal; and an event analyser arranged to analyse the corresponding portions located by the event locator and to determine whether they match the predetermined events of the event data, to thereby determine whether the audio signals match.
The signature generation device of the system is able to produce a digital signature which can be used to identify an audio signal, without requiring excessive data processing to produce the signature.

Further, the system requires the use of only one signature generation device. Thus, the processing needed to be performed by the audio signal comparing device is kept low.

In a preferred embodiment, the signal energy analyser is arranged to use digital bandpass filtering (for example using the Goertzel algorithm) or a Fourier transform to determine the energy level at each said particular frequency.

In a further embodiment, the event detector is arranged to detect, as a said predetermined event, a peak in energy (maximum energy value) for a said particular frequency or a maximum rate of change of energy for a said particular frequency. Still further, the event detector may be arranged to detect, as predetermined events, a series of peaks (maximum values) in energy and/or peaks (maximums) in rate of change of energy, each peak being for a said particular frequency band. Each peak (maximum) may be for the same particular frequency band; or, each peak may be for a different particular frequency band.

In another embodiment, the event detector is arranged to detect n predetermined events, where n > 1, each of the n predetermined events occurring within a corresponding one of m sections of the sampled data segment in the time domain.

In still another embodiment, the digital signature generation device further comprises a time stamp generator operable to generate a time stamp indicating the time at which the digital signature was generated.

In addition, the digital signature generation device may further comprise a digitiser, operable to digitise an analogue data segment to provide the sampled data segment. Also, the digital signature generation device may include an audio signal detector for detecting an audio signal emitted in the vicinity of the digital signature generation device.

The event data extracted by the signature generator may include, for each detected predetermined event, information indicating the time of occurrence of the predetermined event within the sampled data segment.

In a preferred embodiment, the event data represents the occurrence of peaks (maximum values) in energy and/or peaks (maximum values) in rate of change of energy for one or more frequency bands; and the event analyser of the audio signal comparing device is operable to analyse the corresponding portions to determine whether corresponding local peaks in energy and/or local peaks in rate of change of energy occur for the respective frequency band or bands.

In a still further preferred embodiment, the event analyser includes a peak characteristics determiner operable, for each corresponding portion, to locate a local peak in energy within a predetermined time window of the peak in (maximum) energy or peak in (maximum) rate of change of energy indicated by the event data, to detect the maximum energy value of the (local) peak, and to detect a lower energy value at a predetermined time interval before or after the (local) peak; a peak characteristics analyser operable to calculate a value based on the maximum energy values and the lower energy values, or a group of values based on each maximum energy value and associated energy value; and a comparator operable to compare the value or values against a threshold to determine whether the audio signals match. The value may be a ratio of the sum of the maximum energy values and the sum of the lower energy values, or a difference between the sum of the maximum energy values and the sum of the lower energy values. Similarly, each value of the group of values may be a ratio of the respective maximum energy value and associated lower energy value, or a difference between the maximum energy value and associated lower energy value. Further, each value of the group of values could be a rate of change of energy determined using the maximum energy value, its respective lower energy value and the time difference between the occurrence of the maximum and lower energy values.

The audio signal matching system may comprise one or more digital signature generation devices, and may comprise one or more audio signal comparing devices.

The or each said digital signature generation device may be a fixed monitoring device associated with a receiving apparatus in a sample household, or a portable monitoring apparatus associated with a household member in the sample household; and the or each said audio signal comparing device may be either a portable monitoring device associated with a household member in the sample household, or a fixed monitoring device associated with a receiving apparatus in the sample household, as the case may be. Alternatively, the or each said digital signature generation device may be a fixed monitoring device associated with a receiving apparatus in a sample household, or a portable monitoring device associated with a household member in the sample household; and the or each said audio signal comparing device may be a reference monitoring device associated with a reference receiver or reference database.

A second aspect of the invention provides an audio signal matching method for determining whether audio signals match, the method comprising: determining the energy level at each of one or more particular frequencies in a sampled data segment of the audio signal; detecting the occurrence of a predetermined event in the energy level of each said particular frequency of the sampled data segment; generating a digital signature for the sampled data segment by extracting event data identifying a set of detected predetermined events; using the event data of the digital signature to locate corresponding portions of another sampled data segment of another audio signal; and analysing the located corresponding portions to determine whether they match the predetermined events of the event data, to thereby determine whether the audio signal and the another audio signal match.

In an embodiment, the energy level at each said particular frequency is determined using the Goertzel algorithm or a Fourier transform.

In a further embodiment, a peak in energy for a said particular frequency or a maximum rate of change of energy for a said particular frequency is detected as a said predetermined event.

Still further, a series of peaks in energy and/or peaks in rate of change of energy, each peak being for a said particular frequency band, may be detected as the predetermined events. In this case, each peak may be for the same particular frequency band. Or, alternatively, each peak may be for a different particular frequency band.

Further, as the predetermined events, n predetermined events may be detected, each of the n predetermined events occurring within a corresponding one of m sections of the sampled data segment in the time domain.

Also, the method may further comprise generating a time stamp indicating the time at which the digital signature was generated.

Further, the method may include a step of digitising an analogue data segment to provide the sampled data segment.

Still further, the extracted event data may include, for each detected predetermined event, information indicating the time of occurrence of the predetermined event within the sampled data segment.

Preferably, the analysing step includes analysing the located corresponding portions to determine whether corresponding peaks in energy and/or peaks in rate of change of energy occur for the respective frequency band or bands.

In this regard, the analysing step may include: for each corresponding portion, locating a peak within a predetermined time window of the peak indicated by the event data; detecting the maximum energy value of the peak and/or a rate of change of energy of the peak; and using the detected maximum energy value and/or rate of change of energy of the peak, together with a threshold, to determine whether the audio signal and the another audio signal match.

The analysing step may include: for each corresponding portion, locating a peak within a predetermined time window of the peak indicated by the event data; detecting the maximum energy value of the peak, and detecting a lower energy value at a predetermined time interval before or after the peak; calculating a value based on the maximum energy values and the lower energy values, or a group of values based on each maximum energy value and associated lower energy value; and comparing the value or values against a threshold to determine whether the audio signal and the another audio signal match.

According to a third aspect of the invention, there is provided a computer program operable in computer equipment to cause the equipment to carry out the method of the second aspect or any of the embodiments thereof, or a computer-readable storage medium storing such a computer program.

Reference is now made, by way of example only, to the accompanying drawings, in which:
Figure 1 is a schematic illustration of an example digital signature generation device for use in a system according to an embodiment of the invention;
Figure 2a is a graph showing a sampled data segment of an audio signal in the time-domain;
Figure 2b is a graph showing the audio energy of the 1050Hz frequency component of the sampled data segment of Fig. 2a;
Figure 3 is a schematic illustration of an example audio signal comparing device for use in a system according to an embodiment of the invention;
Figure 4a is a graph showing the audio energy of a particular frequency band of a sampled data segment of an audio signal detected at a digital signature generation device;
Figure 4b is a graph showing the audio energy of a particular frequency band of a sampled data segment of another audio signal received at an audio signal comparing device;
Figure 5a shows a fixed monitoring apparatus incorporating a digital signature generation device;
Figure 5b shows a portable monitoring apparatus incorporating an audio signal comparing device.

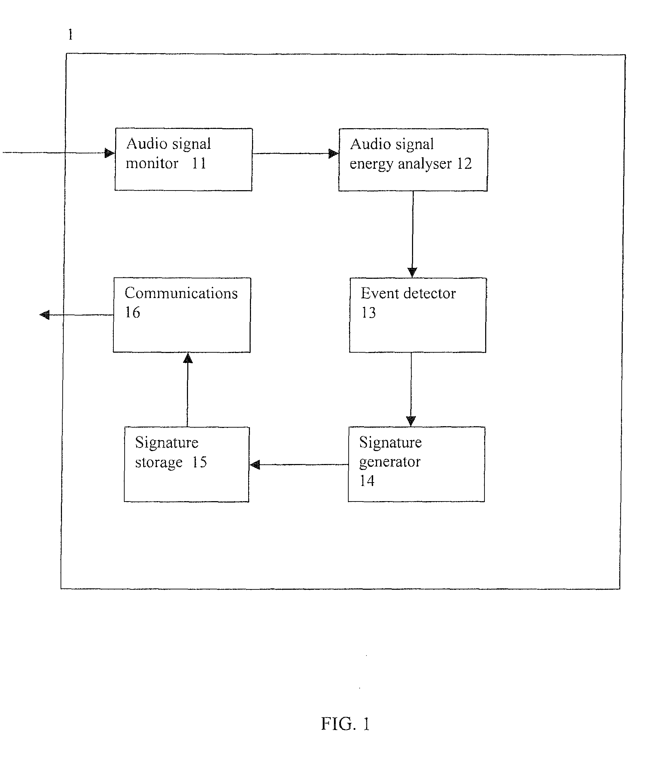

Figure 1 is a schematic illustration of an example digital signature generation device 1 for use in a system embodying the invention. The digital signature generation device 1 includes an audio signal monitor 11 for receiving an audio signal; an audio signal energy analyser 12 arranged to determine the audio energy of one or more particular predetermined frequencies in the signal; an event detector 13 arranged to detect the occurrence of a predetermined event in the energy level of each predetermined frequency; a signature generator 14 arranged to generate a digital signature by extracting event data identifying a set of predetermined events detected by the event detector; a signature storage 15 for storing the digital signature; and a communications section 16 for transmitting the digital signature.

The audio signal monitor 11 may be associated with a receiver, such as a television or radio, at a sampled household or at a reference monitoring site. In this case, the audio signal monitor 11 is capable of detecting audio segments associated with the programs viewed or heard on the receiver. The audio segments may be detected electrically, in which case the audio signal monitor 11 is electrically connected with the receiver. Alternatively, the audio segments may be detected as sound waves, in which case the audio signal monitor requires a suitable audio detector such as a microphone.

The audio signal detected by the audio signal monitor 11 is digitised (if not received in digital form) and sampled. The sampling may be intermittent, e.g. with a series of sampled audio segments of selected length being provided at selected intervals, or may be continuous, so that a continuous digital sampled audio segment stream is provided.

A sampled segment is passed to the audio signal energy analyser 12. The audio signal energy analyser 12 is arranged to determine the energy level of one or more predetermined frequency components of the sampled audio segment.

In a preferred embodiment, the audio signal energy analyser 12 is arranged to perform digital bandpass filtering on the sampled segment so as to separate out the frequency component(s) of interest. Preferably, this digital bandpass filtering is performed using the Goertzel algorithm. Such an arrangement advantageously minimises the processing that need be performed by the audio signal energy analyser 12.

Alternatively, the audio signal energy analyser may perform a Fourier transform (e.g. FFT) on the sampled segment so as to transform the entire audio segment uniformly to the frequency domain, with the predetermined frequency component(s) (bins) of interest then being selected.

In either case, the audio signal energy analyser 12 may be implemented in digital signal processing (DSP) logic.

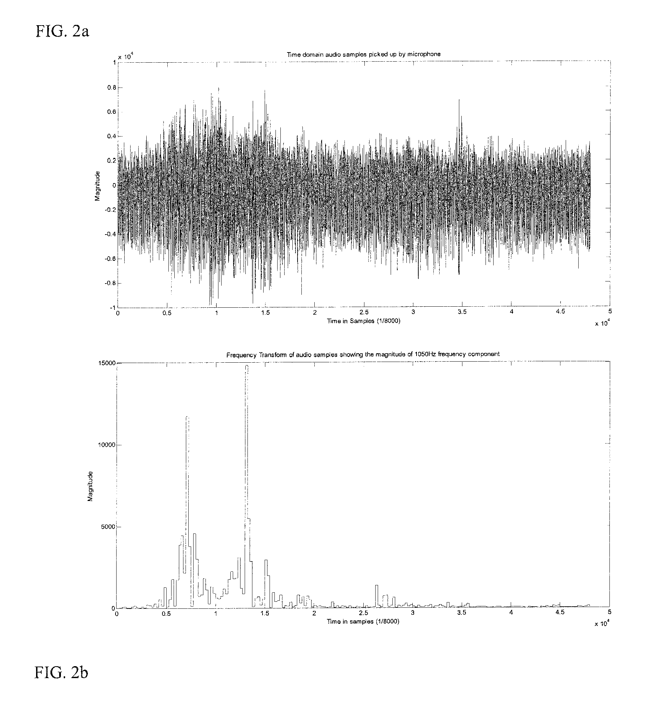

Figure 2a is a graph showing the amplitude of the audio signal segment detected by the audio signal monitor 11. In the figure, the x-axis represents the time elapsed as a function of the number of audio samples taken within the segment, and the y-axis represents the magnitude of the energy for each sampling.

Figure 2b shows the magnitude of the energy of one particular frequency band, after analysis by the audio signal energy analyser 12. The frequency band shown in the figure is a frequency component centred at 1050Hz. In the figure, the x-axis represents the time as a function of the number of samples taken, and the y-axis represents the magnitude of the energy of the 1050Hz component at each sampling. Thus, as can be seen from Fig. 2b, after analysis by the audio signal energy analyser 12, the energy level of one or more predetermined frequencies (frequency bands) is obtained.

After determination of the energy levels of the predetermined frequencies by the audio signal energy analyser 12, the energy levels thus obtained are analysed by the event detector 13. The event detector 13 can also be implemented in DSP.

The event detector 13 is arranged to detect the occurrence of predetermined events in the energy level of each predetermined frequency. As such a predetermined event, the event detector may be arranged to detect a maximum energy value (peak energy) in a predetermined frequency band, or a maximum rate of change of energy in a predetermined frequency band.

For example, the event detector may be arranged to detect a maximum (peak) energy value as a predetermined event. In this case, the event detector 13 is arranged to detect, for each predetermined frequency of the audio segment, the occurrence of the maximum value of the energy level. Hence, for each predetermined frequency component determined by the signal energy analyser 12, the event detector is arranged to detect the maximum value of the energy level of that component as a predetermined event.

Therefore, if the signal energy analyser 12 is arranged to determine the energy level for each of n (n > 1) predetermined frequency bands, the event detector 13 in the above example may be arranged to detect the maximum energy of the first frequency band, the maximum energy of the second frequency band, and so on up to the maximum energy of the nth frequency band, as predetermined events occurring within an (e.g. 30 second) audio segment.

Alternatively, if the signal energy analyser 12 is arranged to determine the energy level of only one predetermined frequency band, then the event detector 13 may be arranged to detect the first to nth highest values (peaks) in the energy level of the frequency band as the predetermined events, e.g. the eight highest peaks of the frequency band centred at 1050Hz.

As a further, preferred alternative, the event detector 13 may be arranged to detect a maximum (peak) rate of change of energy as a predetermined event.

For example, if the signal energy analyser 12 is arranged to determine the energy level for each of n (n > 1) predetermined frequency bands, the event detector 13 in the above case may be arranged to detect the maximum rate of change of energy of the first frequency band, the maximum rate of change of energy of the second frequency band, and so on up to the maximum rate of change of energy of the nth frequency band, as predetermined events occurring within an (e.g. 30 second) audio segment.

Alternatively, if the signal energy analyser 12 is arranged to determine the energy level of only one predetermined frequency band, then the event detector 13 may be arranged to detect the first to nth highest rates of change in the energy level of the frequency band as the predetermined events, e.g. the eight highest rates of change of energy of the frequency band centred at 1050Hz.

For some types of audio, such as piano music, a played note may cause a sharp increase in the energy level at a particular (predetermined) frequency, followed by a gradual (and perhaps uneven) decay. Detecting the maximum rate of change of energy as a predetermined event is advantageous in such cases because it enables the sharp rise (attack) to be clearly detected. It may be more difficult in such cases to clearly identify the absolute maximum value of the energy level.

The signature generator 14 is arranged to extract event data identifying a set of predetermined events detected by the event detector 13, so as to form a digital signature for the sampled audio segment. The signature generator 14 may also be provided in DSP.

More particularly, the signature generator 14 is arranged to generate, for each event detected by the event detector 13, information identifying the event (such as the time of occurrence of the event) as an item of event data. The set of items of event data for a particular audio segment form a digital signature for that sampled segment.

The signature generator 14 writes the digital signature for an audio segment into the signature storage (memory) 15. The digital signature(s) stored in the storage 15 can subsequently be telecommunicated from the digital signature generating device 1 through the communications section 16.

A specific example of the processing performed by the digital signature generating device 1 will now be described. In the example, the audio signal monitor 11 samples 30 second segments of the audio signal, each 30 second segment being sampled at a sampling rate of 8kHz. Each 30 second segment is split into eight 3.75 second sections, and the signal energy analyser 12 is arranged to determine the energy level of a different, predetermined frequency band in each of the 3.75 second sections. For example, the signal energy analyser 12 uses the Goertzel algorithm to filter out a different predetermined frequency in each of the eight 3.75 second sections. For each of the 3.75 second sections, the event detector 13 examines the energy level determined for the respective predetermined frequency band by the signal energy analyser 12, and detects the occurrence of a predetermined event.

In this example, the predetermined event is the maximum energy value of the particular frequency band for the particular, respective 3.75 second section. For example, the maximum energy values of eight frequency bands centred at 1050Hz, 1180Hz, 1320Hz, 1400Hz, 1570Hz, 1760Hz, 1980Hz and 2100Hz, respectively, are used as the predetermined events detected by the event detector 13. Thus, the first predetermined event is the maximum energy of the 1050Hz band in the first 3.75 second section; the second predetermined event is the maximum energy of the 1180Hz frequency band in the second 3.75 second section; and so on, up to the eighth predetermined event being the maximum energy of the 2100Hz frequency band in the eighth 3.75 section. In other words, the frequency bands are cycled through (by the signal energy analyser 12) in correspondence to the successive sections of the audio segment. In this way, the occurrence of eight predetermined events (one for each predetermined frequency band, occurring in a respective 3.75 second section of the sampled audio segment) is detected by the event detector 13. The signature generator 14 generates, for each predetermined event detected by the event detector 13, information identifying the event (such as the time of occurrence of the event) as an item of event data. The set of eight items of event data for the sampled audio segment is a digital signature for that segment.

Of course, as outlined above, alternative predetermined events could be used instead, such as using the maximum energy of the same frequency band for each 3.75 second section; in this case, the audio signal energy analyser 12 is arranged to determine the energy level of the same predetermined frequency band for each sub-section of the audio segment.

Alternatively, the maximum rate of change of energy of each of the eight frequency bands, one frequency band corresponding to a respective section, may be used as the predetermined event; in this case, the event detector 13 is arranged to detect a maximum rate of change of the energy level, rather than a maximum value of the energy level, as a predetermined event.

As a further alternative, the maximum rate of change of energy of the same frequency band for each of the sections can be used as the predetermined event. In this case, the audio signal energy analyser 12 is arranged to determine the energy level of the same predetermined frequency band for each section of the audio segment; and the event detector 13 is arranged to detect a maximum rate of change of the energy level in each section.

The event data generated by the signature generator 14 includes information identifying the occurrence of each predetermined event, for example the time of occurrence of each event. Thus, the event data for n predetermined events may be n successive times t₁ to tₙ. These times are preferably written in a form derived from the sampling number within the audio segment at which the event occurred, as opposed to as an absolute time.

In this regard, if for example sampling is performed at 8kHz and the audio signal is analysed in blocks, each block containing 250 samples, then 120 blocks are analysed per 3.75 second section of each 30 second audio segment. The timing of a predetermined event occurring in the 3.75 second section, and detected by the event detector 13, can then be written as a block number from 0 to 120. Hence, the time of occurrence of each predetermined event may take the form of a sample number or sample block number within the audio segment or within a section of the audio segment. Thus, the digital signature written by the signature generator 14 into the signature storage 15 may include a sequence of (e.g. eight) sample numbers or sample block numbers within the audio segment or a section of the audio segment.

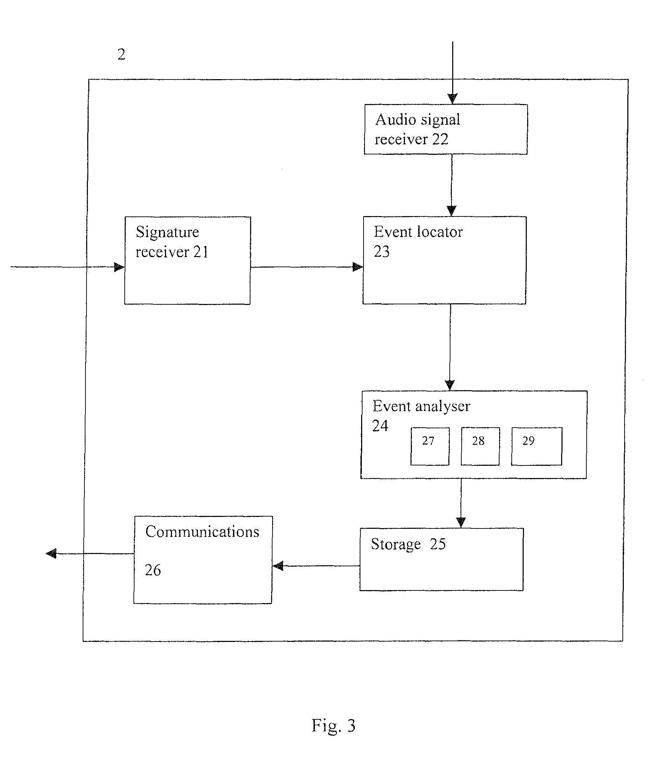

Figure 3 is a schematic illustration of an example audio signal comparing device for use in a system embodying the invention. The audio signal comparing device 2 includes a signature receiver 21 for receiving a digital signature (of a first audio signal) generated by a digital signature generating device 1; an audio signal monitor 22 for receiving a second audio signal; an event locator 23 arranged to use the event data of the received digital signature to locate corresponding portions of a sampled data segment of the second audio signal; an event analyser 24 arranged to analyse the corresponding portions of the sampled data segment of the second audio signal, and to determine whether they match the predetermined events of the event data of the digital signature. In this way, the audio signal comparing device 2 is able to determine whether the first audio signal represented by the digital signature matches the second audio signal.

The signature receiver 21 is a communication section suitable for receiving a signal including digital signatures. The signature receiver may, for example, be a radio receiver, a modem or another data receiver.

The audio signal receiver 22 is a communication section suitable for receiving an audio signal. The audio signal receiver 22 may be an electrical connection to a receiver (e.g. TV or radio), or a microphone for detecting an audio signal as sound waves. Alternatively, it can be another input such as a CD or DVD reader, modem, etc.

The event locator 23 is arranged so as to have as inputs both the digital signature received by the signature receiver 21 and a sampled data segment of the second audio signal received by the audio signal receiver 22. The event locator 23 uses the event data included in the digital signature to locate corresponding portions of the sampled data segment of the second audio signal. The event locator may be implemented in DSP.

As described above, the event data of the digital signature includes information identifying the occurrence of each predetermined event in the audio segment of the first audio signal to which the signature relates. This information is preferably contained in the event data as a time of occurrence of each predetermined event within the audio segment, for example in the form of a sample number or sample block number within the audio segment or within a (sub)section of the audio segment.

In this case, the event locator 23 uses the timings given in the event data to find the corresponding portions of the sampled segment of the second audio signal received from the audio signal receiver 22. In other words, it locates the portions of the sampled segment of the second audio signal that correspond to the timing points, e.g. sample numbers or sample block numbers, indicated by the event data for the segment of the first audio signal.

The event locator 23 may be pre-set to consider the same frequency band(s) as that represented by the event data of the digital signature. In other words, the event locator 23 of the device 2 and the audio signal energy analyser 12 of the device 1 may be set in advance to consider (detect) the same predetermined frequency bands. For example, if the audio signal energy analyser 12 uses digital bandpass filtering to detect the energy level of a particular frequency band, the event locator 23 may be set in advance to perform the same digital bandpass filtering to detect the energy level of the same frequency band. If the audio signal energy analyser 12 is set to detect a plurality of predetermined frequency bands in sequence (e.g. one for each respective section of an audio segment), the event locator 23 may be set in advance to detect the same predetermined frequency bands in the same sequence.

Alternatively, the items of event data of the digital signature may indicate the frequency of each event, and the event locator 23 may use this information to extract the energy level of the correct frequency component.

The event analyser 24 analyses the corresponding portions located by the event locator 23 and determines whether they match the predetermined events of the event data. The event analyser 24 may be implemented in DSP and may include a peak characteristics determiner 27, a peak characteristics analyser 28 and a comparator 29.

The peak characteristics determiner 27 is operable, for each corresponding portion located by the event locator 23, to locate a (local) peak in energy within a predetermined time interval (e.g. +/- 30mS) of the timing (e.g. sample number or sample block number) indicated by the respective item of event data. It is further operable to detect the highest energy value of the detected local peak, and to detect first and second lower energy values occurring at predetermined timings (e.g. a predetermined number of samples or sample blocks) before and after the highest energy value of the local peak.

The peak characteristics analyser 28 is operable to calculate a first sum of the highest energy values obtained by the peak characteristics determiner 27; a second sum of the first lower energy values obtained by the peak characteristics determiner 27; and a third sum of the second lower energy values obtained by the peak characteristics determiner 27. Thus, if there are eight items of event data in the digital signature, there will be a corresponding eight highest energy values to be summed, eight first lower energy values to be summed, and eight second lower energy values to be summed.

The peak characteristics analyser 28 is further operable to calculate a first ratio of the first sum and the second sum; and to calculate a second ratio of the first sum and the third sum.

The comparator 29 is operable to compare each of the first ratio and the second ratio to a threshold to determine whether the events noted in the digital signature of the segment of the first audio signal also occurred in the sampled segment of the second audio signal. For example, if the ratio of the first sum/second sum and the ratio of the first sum/third sum are both above a threshold value (e.g. 5), the comparator can make a determination that the segment of the first audio signal and the segment of the second audio signal match, i.e. both represent the same audio source (i.e. the same piece of audio).

Instead of calculating the ratios of the first sum and the second sum, and the first sum and the third sum, the peak characteristics analyser 28 could instead calculate another representative value, such as a first difference between the first sum and the second sum and a second difference between the first sum and the third sum.

Further, the peak characteristics analyser could be arranged to calculate a ratio or difference value for each highest value and its respective first (or second) lower value, and to compare each of the obtained ratios or difference values against a threshold to determine whether the audio segments match.

Still further, the peak characteristics analyser could be arranged to calculate a rate of change between each highest value and its respective first or second lower value, using the time difference between the occurrence of the highest value and the first/second lower value. If necessary, more values may be taken into consideration when determining the rate of change (e.g. energy values at time points between the first lower value and the highest value).

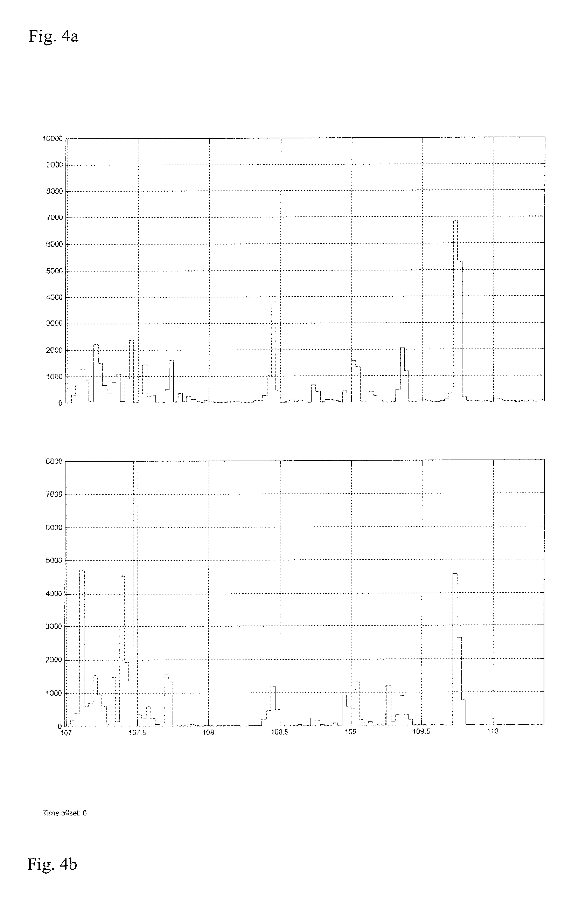

Figs. 4a and 4b illustrate the processing performed by the event locator 23 and event analyser 24 of the audio signal comparing device 2. Figure 4a represents the audio energy for a particular predetermined frequency band in a 3.75 second section of a sampled audio segment, as detected by the audio signal energy analyser 12 of the digital signature generating apparatus 1 of Fig. 1. At this predetermined frequency in this section of the sampled segment, the predetermined event of a maximum energy value occurs at 109.75 seconds, which is 2.75 seconds after the start of the 3.75 second section.

Accordingly, in the digital signature generated by the signature generator 14, there is an item of event data indicating the occurrence of an event at 2.75 seconds after the start of the section.

Upon reception of the digital signature and a segment of a second audio signal, the event locator 23 of the audio signal comparing device 2 finds the corresponding portion of the segment of the second audio signal, for the same predetermined frequency. In other words, the event locator 23 locates the portion of the segment which occurs at around 109.75 seconds, or 2.75 seconds after the start of the relevant section. The event analyser 24 is pre-set to analyse the same predetermined frequency band as that detected by the audio signal energy analyser 12 of the digital signature generating device 1. In other words, each of the audio signal energy analyser 12 and the audio signal comparing device 2 is pre-set to detect the energy level of the same predetermined frequency band for the same section (1 to n) of a sampled audio segment.

The event analyser 24 searches for a local peak in energy (at the predetermined frequency) within a predetermined time interval of the indicated event, e.g. within 30 mS of the event indicated at 2.75 seconds into the section.

Figure 4b shows a graph of the audio energy of the same predetermined frequency band in the segment section of the second audio signal. As can be seen, a local peak in energy occurs at approximately the same time point. This local peak is located by the event analyser 24. The highest energy value of this peak, and the first and second lower energy values of the peak are then obtained for analysis. Similar processing is performed for each of the other items of event data indicated in the digital signature, and the corresponding sections of the sampled data segment of the second audio signal. The obtained highest energy values and first and second lower energy values are then used to determine whether the segment of the second audio signal matches the segment of the first audio signal, i.e. as to whether they represent the same audio.

In the description above, the event data of a digital signature generated by the digital signature generating device 1 includes information indicating the time of occurrence of an event (e.g. time within the data segment). As described above, each item of event data may also indicate the frequency at which the event was detected.

In a further embodiment, the digital signature generating device 1 includes a time stamp generator for generating a time stamp for inclusion in the digital signature. The time stamp indicates the date and time at which the digital signature was generated. By knowing the date and time at which a digital signature was generated, comparison of the digital signature against broadcasts made at around that time can be performed. For example, at the audio signal comparing device, segments of second audio signals (e.g. from broadcast programmes) having the same date and time stamps can be compared against the digital signature to see if any of the second audio signals match the digital signature.

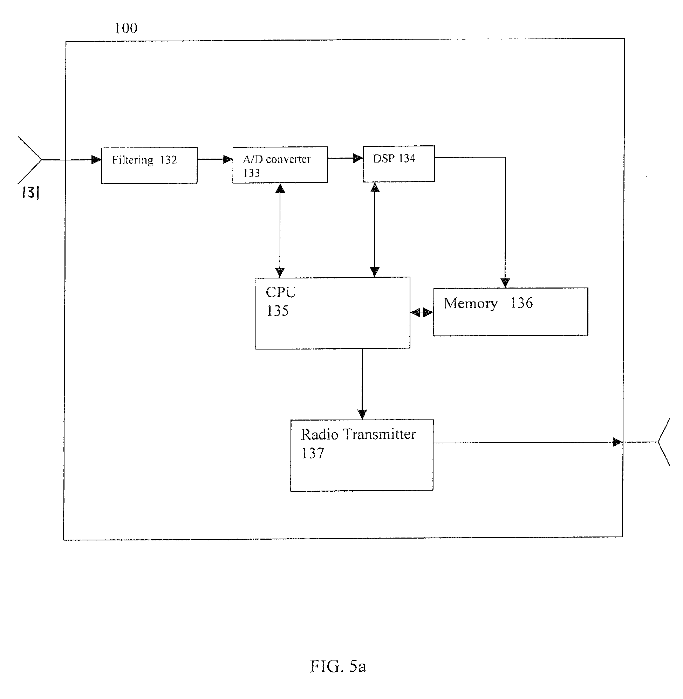

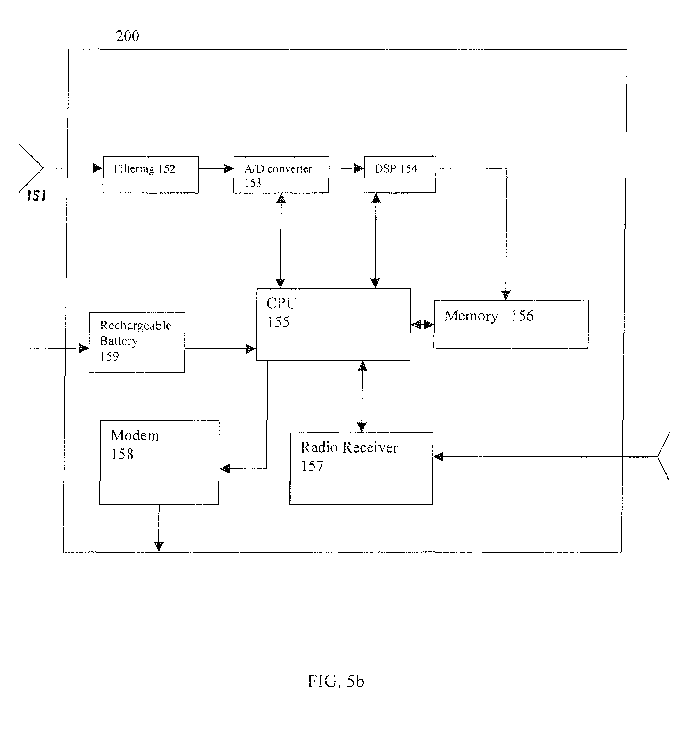

A specific implementation of an audio matching system using the digital signature generating device 1 and the audio signal comparing device 2 will now be described with reference to Figures 5a and 5b, wherein Fig. 5a shows a fixed monitoring apparatus 100 incorporating a digital signature generation device 1, and Fig. 5b shows a portable monitoring apparatus 200 incorporating an audio signal comparing device 2.

The fixed monitoring device 100 and the portable monitoring device 200 are for use in a sample household. In particular, the fixed monitoring apparatus 100 is associated with a receiver (e.g. TV or radio) in the sample household, and the portable monitoring apparatus 200 is associated with a household member of the household, i.e. is designed to be worn/carried by the household member. In this embodiment, the fixed monitoring apparatus 100 and the portable monitoring apparatus 200 are used in combination to determine the exposure of the household member to the programmes selected on the receiver associated with the fixed monitoring apparatus. A plurality of fixed monitoring apparatuses may be provided, each associated with a respective one of a plurality of receivers. Similarly, a plurality of portable monitoring apparatuses may be provided, each associated with a respective household member.

As can be seen, in the example configuration of Fig. 5a the fixed monitoring apparatus 100 includes a microphone 131 for detecting sound in the vicinity of its respective receiver, i.e. as an audio signal monitor 11. The apparatus further includes a filtering section 132 for performing any necessary bandpass filtering in the analogue domain, and an A/D converter 133 for converting the filtered signal output by the filtering section 132 into a digital signal. The resultant digital signal is received by digital signal processing (DSP) logic 134, which is configured to perform the functions of the audio signal energy analyser 12 and the event detector 13. A microprocessor (CPU) 135 is in overall control of the apparatus, and controls the functions of the A/D converter 133 and the DSP 134. A memory 136 is provided, which contains program code for controlling the CPU, and to which data can be written by the DSP and the CPU and from which data can be read by the CPU (and sent to the DSP, if required). The memory may be a combination of RAM and ROM, or suchlike. The DSP and/or the CPU functions as the signature generator 14 and writes the event data to the memory 136 (acting as a signature storage 15). A radio transmitter 137 is provided also (as a communications section 16), the radio transmitter 137 being controlled by the CPU 135 and being used to broadcast a signal including the digital signature (event data), to the portable monitoring apparatus 200.

It should be noted that in addition to the above, the fixed monitoring device 100 may have functionality/hardware for determining the programme received on its respective television set, such as a code reader for reading a code embedded in the programme signal and/or a conventional signature extractor for generating a characteristic signature of the received programme signal. Such features of a fixed monitoring device are well-known in the art and are not described here. A description of a fixed monitoring device having such functionality may be found, for example, in EP0669070.

As can be seen from Fig. 5b, the configuration of the portable monitoring apparatus 200 is broadly similar to that shown in Fig. 5a for the fixed monitoring apparatus 100. A microphone 51 is arranged to detect sound in the vicinity of the portable monitoring apparatus, i.e. to function as an audio signal receiver 22. A filtering section 152 is provided to perform any necessary bandpass filtering on the detected audio signal, and an A/D converter 153 is provided to convert the filtered signal to the digital domain. Digital signal processing (DSP) logic 154 is arranged to receive the digital signal outputted by the A/D converter 153 and to perform the functions of the event locator 23 and the event analyser 24. A microprocessor (CPU) 155 is in overall control of the apparatus and controls the functions of the A/D converter 153 and the DSP 154. A memory 156 stores program code for the CPU 55 and data written to it by the CPU and/or DSP. This data can be read out by the CPU 155. The memory may be a combination of RAM and ROM or suchlike. A radio receiver 157 is provided to receive the radio signals (including the event data) transmitted by the fixed monitoring apparatus 100. In other words, the radio receiver functions as a signature receiver 21. The radio receiver 157 is controlled by the CPU 155, which can transmit the received data to the DSP 154 for processing. A modem 158 enables the results of comparison by the event analyser 24 (implemented in DSP 154), and other information, to be transmitted from the portable monitoring apparatus 200 to an external device such as a base station. Hence, the modem 158 acts as a communication section 26. A rechargeable battery 159 is provided so as to power the apparatus.

As with the fixed monitoring apparatus 100, the portable monitoring apparatus 200 may also include means such as a code reader and/or conventional signature extractor for use in identifying the received programme signal. Such features of a portable monitoring apparatus are in general known, e.g. from EP0669070, and are not described here.

In use, the fixed monitoring apparatus 100 extracts event data from the audio signal that it detects using its microphone 131, in the manner described above with reference to Figs. 1 and 2. A signal containing the resulting generated digital signature is transmitted from the radio transmitter 137 and detected by the radio receiver 157 of the portable monitoring apparatus 200.

Preferably, the fixed monitoring apparatus 100 transmits its generated digital signature immediately after completing analysis of each audio segment. In this way, the portable monitoring apparatus 200 receiving the signal from the fixed monitoring apparatus 100 knows that the digital signature is for the previous audio segment (e.g. for the previous 30 seconds of audio if that is the preset segment length). Thus, a synchronisation between the fixed and portable monitoring apparatuses is realised.

Therefore, at the portable monitoring apparatus, the event locator 23 and event analyser 24, implemented in DSP 154, perform the analysis on the previous audio segment of the second audio signal received by the audio signal receiver 22 (microphone 151). In other words, they perform the processing (described above with reference to Figures 3 and 4) on the previous 30 seconds of audio if that is the preset segment length.

The resulting determination (i.e. of the comparator 29 implemented in DSP 154) is stored by the CPU 155 in the memory 156, together with a time-stamp. The determination can subsequently be transmitted from the portable monitoring device 200 to a reference monitoring site through the modem 158, for example overnight whilst the portable monitoring device 200 is recharging.

By implementing the digital signature generating device 1 and the audio signal comparing device 2 in a fixed monitoring apparatus 100 and a portable monitoring apparatus 200 of a sample household, it can readily be determined whether or not the portable monitoring device is receiving the same audio as the fixed monitoring device. In this way, a reliable determination can be made as to whether or not the household member wearing the portable monitoring device is exposed to the same audio as received by the receiver with which the fixed monitoring apparatus is associated. Thus, it can be determined accurately whether the audience member was in fact viewing the received programme or not. This can be achieved whilst requiring a minimum amount of processing in the portable monitoring device. Further, by searching for events in the audio signal detected by the portable monitoring device matching the events detected in the audio signal detected by the fixed monitoring device, matching can be realised despite the presence of background noise such as conversation and kitchen sounds.

If a plurality of multiple fixed monitoring apparatuses 100 are provided, the signal transmitted by each fixed monitoring apparatus 100 preferably also includes an identification code identifying the fixed monitoring apparatus. In this way, each portable monitoring apparatus 200 receiving the signal can determine which fixed monitoring apparatus it is from. By using the identification code in combination with the determination made by the event analyser 24, the portable monitoring apparatus can determine which of the fixed monitoring apparatuses 100 it is in the vicinity of. This information is transmitted as part of the data transmitted from the modem 58.

Preferably, the CPU or DSP of the portable monitoring apparatus 100 is configured to apply a smoothing algorithm to the results of the analysis performed by the event analyser. In particular, an algorithm can be applied to determine that the portable monitoring apparatus is not exposed to the same audio as a fixed monitoring apparatus if a certain number (e.g. 10) no matches occur, and to determine that the portable apparatus is once again exposed to the same audio as the fixed monitoring apparatus if a certain number (e.g. 10) matches occur. In this way, erroneous in-room or out-of-room detection can be avoided.

Further, when a plurality of fixed monitoring apparatuses 100 are provided, it is preferable that there is an offset between the times of transmission of their respective signals including event data. For example, if two such fixed monitoring apparatuses 100 are provided, each transmitting a signal every 30 seconds (in correspondence to an audio segment length of 30 seconds), it is preferable that the signals transmitted by the first and second fixed monitoring apparatuses 100 are offset by 15 seconds. In this way, processing load at the receiving side (portable monitoring apparatus 200) is more evenly spread.

In the above example, it has been described that each fixed monitoring apparatus 100 transmits a signal including a digital signature, this signal being received by the portable apparatuses 200. As an alternative, the portable monitoring apparatuses 200 may transmit the signal including the digital signature (and identification code if more than one portable apparatus is present in the system), with the signal(s) being received by the fixed monitoring apparatuses.

Of course, the digital signature generating device and audio signal comparing device of embodiments of the invention can be applied to other situations for determining whether or not audio signals match. Figures 5a and 5b show merely one example use.

As an alternative, two signature generating devices could be used to generate digital signatures from two audio signals, and a comparator could be provided to compare the two digital signatures. This could be used, for example, if both audio signals were 'clean', such as directly electrically obtained from the audio source.

## Claims

1. An audio matching system for detecting matching of audio signals, the system comprising:
a digital signature generation device for generating signatures from an audio signal, the digital signature generation device comprising:
a signal energy analyser arranged to determine the energy level at each of one or more particular frequencies in a sampled data segment of the audio signal;
an event detector arranged to detect the occurrence of a predetermined event in the energy level of each said particular frequency of the sampled data segment;
a signature generator arranged to extract event data identifying a set of predetermined events detected by the event detector, the event data forming a digital signature for the sampled data segment; and
a transmitter for transmitting the digital signature; and
an audio signal comparing device for comparing whether two audio signals match, the audio signal comparing device comprising:
a receiver for receiving a said digital signature of an audio signal generated by the digital signature generation device;
an event locator arranged to use the event data of the received digital signature to locate corresponding portions of another sampled data segment of another audio signal; and
an event analyser arranged to analyse the corresponding portions located by the event locator and to determine whether they match the predetermined events of the event data, to thereby determine whether the audio signals match.

2. An audio matching system as claimed in claim 1, wherein the signal energy analyser of the digital signature generation device is arranged to use the Goertzel algorithm or a Fourier transform to determine the energy level at each said particular frequency.

3. An audio matching system as claimed in claim 1 or 2, wherein
the event detector of the digital signature generation device is arranged to detect, as a said predetermined event, a peak energy for a said particular frequency or a peak rate of change of energy for a said particular frequency.

4. An audio matching system as claimed in claim 3, wherein the event detector is arranged to detect, as predetermined events, a series of peak energies and/or peak rates of change of energy, each peak being for a said particular frequency band.

5. An audio matching system as claimed in claim 4, wherein each peak is for the same particular frequency band; or wherein each peak is for a different particular frequency band.

6. An audio matching system as claimed in any of claims 3 to 5, wherein the event detector is arranged to detect n predetermined events, where n > 1, each of the n predetermined events occurring within a corresponding one of m sections of the sampled data segment in the time domain.

7. An audio matching system as claimed in any preceding claim, wherein the event data extracted by the signature generator of the digital signature generation device includes, for each detected predetermined event, information indicating the time of occurrence of the predetermined event within the sampled data segment.

8. An audio matching system as claimed in any preceding claim, wherein
the event analyser of the audio signal comparing device is operable to analyse the corresponding portions to determine whether corresponding peaks in energy and/or peaks in rate of change of energy occur for the respective frequency band or bands.

9. An audio matching system as claimed in claim 8, wherein the event analyser of the audio signal comparing device includes
a peak characteristics determiner operable, for each corresponding portion, to locate a peak in energy within a predetermined time window of the peak in energy or peak in rate of change of energy indicated by the event data, to detect the maximum energy value of the peak, and to detect a lower energy value at a predetermined time interval before or after the peak;
a peak characteristics analyser operable to calculate a value based on the maximum energy values and the lower energy values, or a group of values based on each maximum energy value and associated energy value; and
a comparator operable to compare the value or values against a threshold to determine whether the audio signals match.

10. A system as claimed in any preceding claim, wherein the audio signal comparing device is configured to use reception of the digital signature to synchronise its analysis of the another sampled data segment of the another audio signal.

11. A system as claimed in any preceding claim, wherein the digital signature generation device is either a fixed monitoring device associated with a receiving apparatus in a sample household, or a portable monitoring apparatus associated with a household member in the sample household; and the audio signal comparing device is either a portable monitoring device associated with a household member in the sample household, or a fixed monitoring device associated with a receiving apparatus in the sample household, as the case may be.

12. An audio signal matching method for determining whether audio signals match, the method comprising:
determining the energy level at each of one or more particular frequencies in a sampled data segment of the audio signal;
detecting the occurrence of a predetermined event in the energy level of each said particular frequency of the sampled data segment;
generating a digital signature for the sampled data segment by extracting event data identifying a set of detected predetermined events;
using the event data of the digital signature to locate corresponding portions of another sampled data segment of another audio signal; and
analysing the located corresponding portions to determine whether they match the predetermined events of the event data, to thereby determine whether the audio signal and the another audio signal match.

13. A method as claimed in claim 12, wherein
a series of peaks in energy and/or peaks in rate of change of energy, each peak being for a said particular frequency band, are detected as the predetermined events.

14. A method as claimed in claim 12 or 13, wherein
the analysing step includes analysing the located corresponding portions to determine whether corresponding peaks in energy and/or peaks in rate of change of energy occur for the respective frequency band or bands.

15. A method as claimed in claim 14, wherein the analysing step includes:
for each corresponding portion, locating a peak within a predetermined time window of the peak indicated by the event data;
detecting the maximum energy value of the peak and/or a rate of change of energy of the peak; and
using the detected maximum energy value and/or rate of change of energy of the peak, together with a threshold, to determine whether the audio signal and the another audio signal match.
